# FASCICULE DE BREVET EUROPEEN

(11) **EP 3 810 904 B1**
(45) Date de publication et mention de la délivrance du brevet: **15.11.2023**
(21) Numéro de dépôt: 19742866.7
(22) Date de dépôt: 14.06.2019
(51) Int. Cl.: F01D 17/16

(54) **SYSTÈME DE CONDITIONNEMENT D'AIR D'UNE CABINE D'AERONEF**
KLIMATISIERUNGSSYSTEM FÜR EINE FLUGZEUGKABINE
AIR-CONDITIONING SYSTEM FOR AN AIRCRAFT CABIN

(30) Priorité: 14.06.2018 FR 1855210
(43) Date de publication de la demande: 28.04.2021
(73) Titulaire: Liebherr-Aerospace Toulouse SAS, 31200 Toulouse (FR); Institut Supérieur de l'Aéronautique et de l'Espace, 31055 Toulouse Cedex 4 (FR)
(72) Inventeur: CROS, Sandrine, 31016 Toulouse Cedex 2 (FR); ROUMEAS, Mathieu, 31016 Toulouse Cedex 2 (FR); FOURAGNAN, James, 31016 Toulouse Cedex 2 (FR); LAURIAU, Pierre-Thomas, 31016 Toulouse Cedex 2 (FR); BINDER, Nicolas, 31016 Toulouse Cedex 2 (FR)
(74) Mandataire: Bringer IP
(86) Numéro de dépôt international: PCT/FR2019/051448
(87) Numéro de publication internationale: WO 2019/239076

(56) Documents cités:
- EP-A2- 1 128 025
- WO-A1-2014/044364
- CA-A1- 2 837 498
- US-A1- 2018 119 609

## Description

### 1. Domaine technique de l'invention

L'invention concerne un système de conditionnement d'air d'une cabine d'aéronef comprenant une turbomachine équipée d'un distributeur d'une turbine radiale de la turbomachine.

### 2. Arrière-plan technologique

Un système de conditionnement d'air comprend de manière classique un dispositif de prélèvement d'air comprimé sur au moins un compresseur d'un moteur de propulsion de l'aéronef et une turbomachine à cycle à air comprenant au moins un compresseur et une turbine radiale, le compresseur étant alimenté en air par le dispositif de prélèvement d'air comprimé après passage par une vanne de régulation de débit ou de pression, et la turbine comprenant une sortie d'air alimentant la cabine en température et débit contrôlés. Le système comprend en outre différents échangeurs de chaleur, vannes de régulation et une boucle d'extraction d'eau.

Différentes solutions sont aujourd'hui proposées pour limiter le prélèvement d'air sur les moteurs de propulsion et qui consistent notamment à prévoir des systèmes de conditionnement d'air plus électriques.

Cette transition vers une électrification du système de conditionnement d'air impose d'optimiser les différents éléments constitutifs du système et notamment de la turbine de la turbomachine à cycle à air.

Cette turbine doit permettre d'assurer une large plage de débit d'air tout en fournissant le maximum de puissance possible sur l'ensemble de la plage de fonctionnement.

En particulier, la turbine doit pouvoir fonctionner depuis une phase de maintenance de l'aéronef au sol (ce qui correspond à un faible débit et à un fort taux de détente) jusqu'à une phase de vol de croisière de l'aéronef, ce qui correspond à un fort débit et à un faible taux de détente).

Il a déjà été proposé de prévoir une turbine à section d'injection variable.

Une telle turbine comprend de manière connue un carter, une roue mobile en rotation autour d'un axe central équipée d'ailettes, et un distributeur agencé en périphérie de la roue mobile et comprenant une pluralité de pales de guidage du flux d'air.

Il existe aujourd'hui deux solutions principales permettant de faire varier la section d'injection d'une telle turbine radiale.

La première solution consiste à modifier la section de passage d'air par le déplacement en translation axiale du carter ce qui permet d'augmenter la hauteur de la veine d'air pour un profil et un calage de pales donnés. Cette solution présente l'inconvénient de pouvoir provoquer une admission partielle d'air en entrée de roue, ce qui génère des écoulements secondaires au bord d'attaque de la roue et dégrade donc la performance de l'étage. Le document US2739782 décrit par exemple une turbine à section d'injection variable selon cette première solution.

La seconde solution consiste à modifier la section de passage d'air par le pivotement des pales du distributeur de la turbine de telle sorte que pour un profil et une hauteur de veine d'air donnés, l'angle des pales du distributeur puisse être modifié. Cette solution impose la présence d'un jeu mécanique au niveau du distributeur pour permettre la rotation des pales, ce qui diminue le rendement de l'étage. En outre, la plage de variation de la section d'injection souhaitée étant en général importante (par exemple de l'ordre de 1:4), il existe un risque de désadaptation de l'entrée de la roue pour les ouvertures ou fermetures extrêmes. Il existe également un risque de blocage au niveau de l'entrée de la roue. Le document EP0332354 décrit par exemple une turbine à section d'injection variable selon cette deuxième solution Le document US2018/119609 décrit une turbine selon l'art antérieur.

Aucune des solutions actuellement connues ne permet donc de modifier la section d'injection sur une large plage de débit tout en maintenant un niveau de performance et de fiabilité compatible avec les besoins des systèmes de conditionnement d'air.

Il existe donc un besoin de disposer d'une solution alternative permettant de pallier les inconvénients des solutions connues.

### 3. Objectifs de l'invention

L'invention vise à fournir un système de conditionnement d'air comprenant une turbomachine comprenant une turbine radiale équipée d'un distributeur qui pallie au moins certains des inconvénients des solutions connues.

L'invention vise en particulier à fournir, dans au moins un mode de réalisation, un tel système qui comprend un distributeur d'une turbine radiale qui permet de modifier la section d'injection de la turbine sur une large plage de débit tout en conservant un niveau de performance et de fiabilité compatible avec les applications aéronautiques.

### 4. Exposé de l'invention

Pour ce faire, l'invention concerne un système de conditionnement d'air selon la revendication 1.

L'invention permet donc de déplacer les pales selon la direction de l'axe central de la veine d'air délimitée par les carters de distributeur. Les inventeurs ont réalisé de manière inattendue, que les performances de l'étage sont meilleures lorsque le jeu est présent au pied de la pale plutôt qu'en tête de pale pour les faibles ouvertures et lorsque le jeu est présent en tête de pale plutôt qu'en pied de pale pour les fortes ouvertures. La notion de faible ouverture et de forte ouverture dépend du type de machine considérée. Le rapport entre la section d'une faible ouverture par rapport à la section d'une forte ouverture est d'une manière générale de l'ordre de 1:4.

Aussi, le déplacement axial des pales dans la veine d'air permet d'améliorer les performances de l'étage de détente. La position de la pale dans la veine d'air permet d'augmenter ou de limiter les vortex dans la veine d'air et donc de modifier les performances d'écoulement d'air. A noter que selon l'invention, pour les ouvertures intermédiaires entre les faibles ouvertures et les fortes ouvertures, les performances sont améliorées pour des jeux répartis entre la tête de pale et le pied de pale. Différentes configurations sont possibles selon la machine considérée.

Avantageusement et selon l'invention, chaque pale à calage variable comprend en outre des moyens de pivotement de la pale autour d'un axe de pivotement couplés auxdits moyens de déplacement axial de la pale entre les deux parois de carter de sorte que chaque pale puisse, sur actionnement desdits moyens de déplacement axial et desdits moyens de pivotement par des moyens de commande, être simultanément pivotée autour dudit axe de pivotement et déplacée axialement entre les deux parois de carter, de manière à pouvoir modifier la section de passage d'air d'amont en aval du distributeur.

L'invention permet donc de modifier simultanément l'angle des pales du distributeur et leur position axiale au sein de la veine d'air.

Le pivotement simultané au déplacement axial permet de modifier la section d'injection tout en améliorant les performances de l'étage de détente.

Avantageusement et selon l'invention, chaque pale à calage variable est solidaire d'un arbre fileté s'étendant parallèlement audit axe central le long dudit axe de pivotement, et coopérant avec au moins un taraudage conjugué ménagé dans une desdites parois de carter de sorte que cette pale puisse, sur actionnement dudit arbre fileté par lesdits moyens de commande, être simultanément pivotée autour dudit axe de pivotement et déplacée axialement entre les deux parois de carter, cet arbre fileté formant lesdits moyens de déplacement axial de la pale et lesdits moyens de pivotement de la pale.

Cette variante avantageuse permet de combiner simultanément le pivotement de la pale et le déplacement axial de la pale dans la veine d'air par un moyen unique, formé d'un arbre fileté qui coopère avec au moins un taraudage ménagé dans une paroi de carter. Une seule commande de l'arbre fileté permet donc à la fois de pivoter la pale et de la déplacer dans la veine d'air.

Selon cette variante avantageuse, le filetage de l'arbre et le filetage conjugué du taraudage conditionnent le déplacement de la pale et forment donc la loi de déplacement de la pale, à la fois en pivotement et en translation axiale dans la veine d'air.

Avantageusement et selon l'invention, ledit arbre fileté de chaque pale présente un filetage non régulier de manière à pouvoir définir une loi de commande du déplacement de la pale non linéaire.

Selon cette variante, un filetage non régulier permet de définir une loi de commande du déplacement de la pale qui est non linéaire. Il est alors possible de définir uniquement par les caractéristiques des filetages les différents points de fonctionnement du distributeur.

Avantageusement et selon l'invention, ledit arbre fileté de chaque pale à calage variable s'étend de part et d'autre de ladite pale de manière à pouvoir coopérer avec deux taraudages conjugués ménagés respectivement dans chacune des deux parois de carter du distributeur.

Cette variante avantageuse permet notamment un meilleur contrôle distributeur.

Avantageusement et selon l'invention, lesdits moyens de commande desdites pales à calage variable sont configurés pour pouvoir actionner simultanément l'arbre de pivotement de chaque pale.

Cette variante avantageuse permet de simplifier la commande des pales en prévoyant un unique moyen de commande pour l'ensemble des pales du distributeur.

Avantageusement et selon l'invention, le distributeur comprend au moins douze pales à calage variable régulièrement réparties autour de l'axe central.

Il est néanmoins possible de concevoir des variantes de réalisation comprenant moins de douze pales à calage variable et/ou des pales à calage variable réparties de manière non régulière autour de l'axe central.

L'invention concerne également un aéronef comprenant une cabine à alimenter en air à pression et température contrôlées par un système de conditionnement d'air selon l'invention.

### 5. Liste des figures

D'autres buts, caractéristiques et avantages de l'invention apparaîtront à la lecture de la description suivante donnée à titre uniquement non limitatif et qui se réfère aux figures annexées dans lesquelles :
- la figure 1 est une vue schématique en perspective d'une turbine d'un système de conditionnement d'air selon un mode de réalisation de l'invention équipée d'un distributeur selon un mode de réalisation de l'invention,
- les figures 2a et 2b sont des vues schématiques partielles en perspective d'une portion du distributeur d'un système de conditionnement d'air selon un mode de réalisation de l'invention,
- les figures 3a et 3b sont des vues schématiques en coupe d'une portion du distributeur d'un système de conditionnement d'air selon un mode de réalisation de l'invention,
- la figure 4 est une vue schématique en coupe partielle du distributeur d'un système de conditionnement d'air selon un mode de réalisation de l'invention dans un plan longitudinal de la turbine le long de son axe de rotation,
- la figure 5 est une vue schématique en perspective d'une roue de turbine et d'un distributeur de turbine d'un système de conditionnement d'air selon un mode de réalisation de l'invention.

### 6. Description détaillée d'un mode de réalisation de l'invention

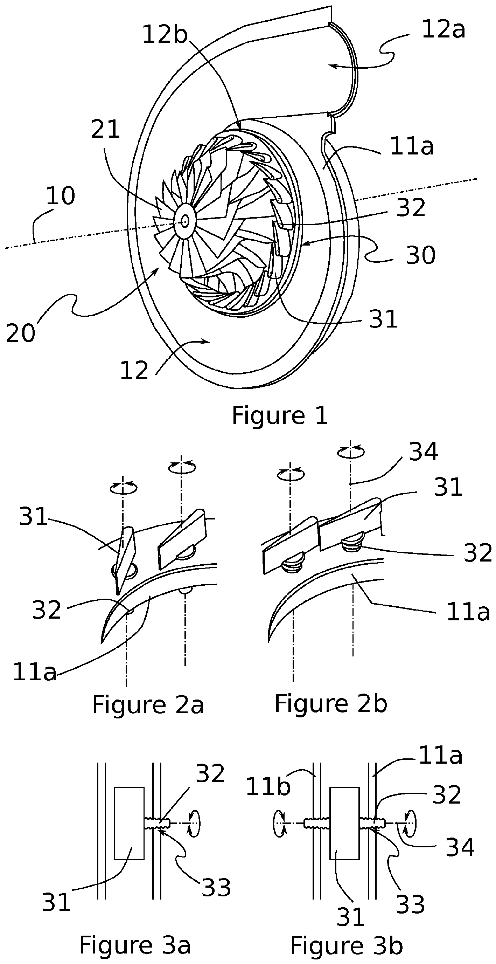

Sur les figures, les échelles et les proportions ne sont pas strictement respectées et ce, à des fins d'illustration et de clarté. Dans toute la description détaillée qui suit en référence aux figures, sauf indication contraire, chaque élément du distributeur est décrit tel qu'il est agencé lorsque le distributeur est monté sur une turbine. Cet agencement est représenté notamment sur la figure 1.

En outre, les éléments identiques, similaires ou analogues sont désignés par les mêmes références dans toutes les figures.

La figure 1 illustre schématiquement une turbine radiale d'un système de conditionnement d'air selon un mode de réalisation de l'invention qui s'étend le long d'un axe central 10 et comprend une roue 20 mobile en rotation autour de l'axe central 10 et un distributeur 30 agencé en périphérie de la roue 20 sur des carters 11a, 11b (dont seul le carter 11a est représenté sur la figure 1). La roue 20 est équipée d'une pluralité d'ailettes 21.

La turbine comprend également une volute 12 (dont une demi-volute est représentée sur la figure 1) dont le diamètre diminue entre une entrée 12a et une sortie 12b qui débouche sur le distributeur 30.

Le distributeur 30 comprend également une pluralité de pales 31 à calage variable, chaque pale 31 à calage variable étant solidaire d'un arbre 32 fileté qui s'étend parallèlement à l'axe central 10.

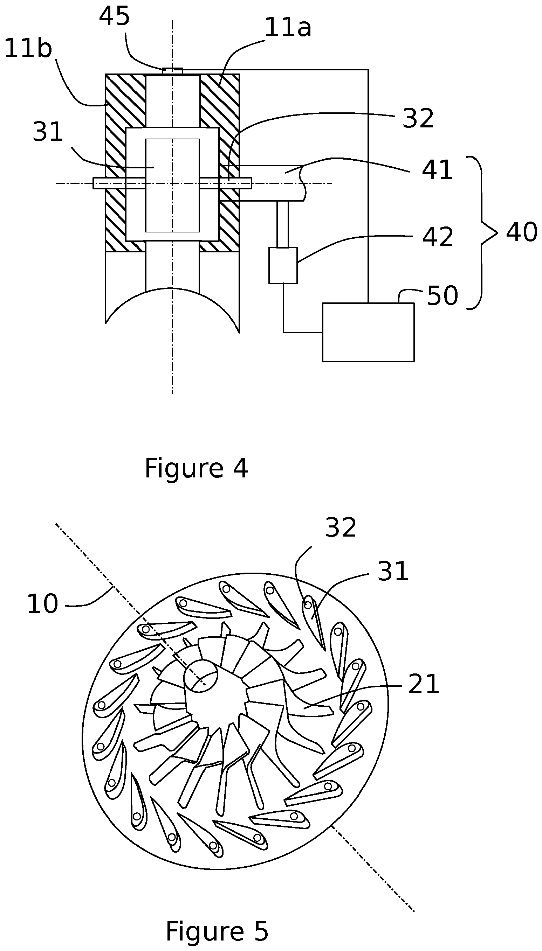

La figure 5 illustre schématiquement en perspective la roue 20 et le distributeur 30 de la turbine selon un mode de réalisation.

Sur les figures 1 et 5, les pales 31 du distributeur sont représentées avec un arbre fileté agencé au voisinage du bord d'attaque des pales alors que les figures 2a et 2b illustrent l'arbre fileté agencé au milieu des pales. Les deux modes de réalisation sont possibles, de même que le mode de réalisation, non représenté sur les figures, selon lequel l'arbre fileté est agencé au voisinage du bord de fuite de la pale.

Tel que représenté sur les figures 2a et 2b, chaque arbre 32 fileté de chaque pale 31 coopère avec au moins un taraudage 33 ménagé dans une des parois de carter 11a, 11b de sorte que cette pale 31 puisse, sur commande de moyens de commande 40 (représentés schématiquement sur la figure 4), être simultanément pivotée autour de son axe de pivotement et déplacée axialement entre les deux carters 11a, 11b au sein de la veine d'air, de manière à modifier la section de passage d'air d'amont en aval du distributeur. Cet arbre fileté 32 et le taraudage conjugué 33 peuvent être de tout type.

Le filetage de l'arbre 32 et le filetage conjugué du taraudage peuvent être des filetages réguliers ou irréguliers. Les caractéristiques du filetage conditionnent la loi de déplacement de la pale dans la veine d'air du distributeur.

Les figures 2a et 2b illustrent schématiquement le principe de déplacement des pales 31 par rapport à une des parois du carter 11a. La figure 2a illustre les pales 31 dans une position vissée des pales, c'est-à-dire une position dans laquelle l'arbre 32 fileté de chaque pale 31 est vissé dans le taraudage conjugué ménagé dans la paroi du carter 11a agencé en regard. La figure 2b illustre les mêmes pales 31 dans une position déployée, c'est-à-dire une position dans laquelle les pales sont à la fois pivotées par rapport à la position de la figure 2a et déplacées axialement par rapport au carter 11a.

Ainsi, une seule commande des pales 31 permet à la fois de modifier l'angle de la pale 31 et la position de la pale dans la veine d'air du distributeur délimité par les deux carters 11a, 11b.

Les figures 3a et 3b illustrent schématiquement les pales 31 en coupe selon deux modes de réalisation possible de l'invention. La figure 3a illustre un mode de réalisation dans lequel la pale 31 est portée par un arbre 32 fileté qui coopère avec un taraudage conjugué formé dans une seule paroi du carter. La figure 3b illustre un mode de réalisation dans lequel la pale 31 est portée par deux arbres 32 filetés qui s'étendent de part et d'autre de la pale et qui coopèrent chacun avec un taraudage conjugué formé respectivement dans chaque paroi du carter.

La figure 4 illustre schématiquement la pale 31 et les moyens de commande 40 de calage de la pale. Ces moyens de commande 40 comprennent par exemple un arbre 41 relié mécaniquement à l'arbre 32 fileté. Cette liaison mécanique peut par exemple comprendre des bras, pignons, paliers reliés à des actionneurs 42 électriques ou électromagnétiques permettant de relier mécaniquement l'arbre 41 de commande et l' arbre 32 de déplacement de la pale 31. Selon un mode préférentiel de réalisation, un seul actionneur peut être configuré pour l'ensemble des pales 31 du distributeur.

Les actionneurs 42 sont pilotés par une unité centrale de commande 50. Cette commande peut être de tout type. Selon un mode de réalisation, la commande dépend des informations fournies par un capteur de pression 45. Ainsi, en fonction des mesures de pression, l'ouverture ou la fermeture des pales 31 du distributeur peut être commandée.

Un système de conditionnement d'air peut également comprendre un ensemble d'organes renfermés dans un carter et présentant des ports de connexion d'entrée et de sortir d'air et un canal de circulation d'air dynamique, plus connu sous le terme d'air RAM, à travers un ou plusieurs échangeurs thermiques. Un tel pack peut faire l'objet de nombreuses variantes de réalisation compatible avec l'invention. Par exemple, il peut comprendre au moins une turbomachine à cycle à air qui comprend un compresseur et une turbine reliés l'un à l'autre par un arbre rotatif. La turbomachine peut également comprendre un ventilateur configuré pour assurer la circulation d'un air dynamique à travers les échangeurs thermiques. Selon une autre variante, la turbomachine peut comprendre un moteur électrique pour former un pack de conditionnement d'air électrique. Le pack peut aussi comprendre une boucle d'extraction d'eau et une conduite de sortie de turbomachine reliée à une chambre de mélange qui débouche dans la cabine à alimenter en air à température et pression contrôlées. La turbine de la machine à cycle à air est selon l'invention équipée d'un distributeur selon l'invention, ce qui permet à la turbine d'assurer une large plage de débit d'air tout en fournissant le maximum de puissance possible sur l'ensemble de la plage de fonctionnement.

Le principe de l'invention pourrait également s'appliquer à un diffuseur variable d'un compresseur centrifuge, ce qui n'est pas couvert par les présentes revendications.

## Revendications

1. Système de conditionnement d'air d'un aéronef comprenant une turbomachine comprenant au moins une turbine radiale et un compresseur, ladite turbine radiale s'étendant le long d'un axe central (10) et comprenant une roue (20) équipée d'ailettes (21) montée mobile en rotation autour dudit axe central (10), un distributeur (30) agencé en périphérie de ladite roue (20) comprenant une pluralité de pales (31) à calage variable agencées autour dudit axe central (10), et une volute (12) comprenant une entrée d'air (12a) et une sortie d'air (12b) débouchant sur ladite pluralité de pales (31) à calage variable, lesdites pales (31) à calage variable étant agencées autour dudit axe central (10) entre deux parois de carter (11a, 11b) de distributeur délimitant entre elles une section de passage d'air dudit distributeur, chaque pale (31) à calage variable comprenant en outre :
- des moyens de déplacement axial de la pale entre les deux parois de carter (11a, 11b),
- des moyens de pivotement de la pale autour d'un axe de pivotement (34) entre les deux parois de carter (11a, 11b),
**caractérisé en ce que** lesdits moyens de pivotement et lesdits moyens de déplacement axial sont coordonnées de manière à pouvoir modifier la section de passage d'air d'amont en aval du distributeur en délimitant un jeu au pied de pale plus important qu'en tête de pale pour des faibles ouvertures de pales, un jeu en tête de pale plus important qu'en pied de pale pour des fortes ouvertures de pales, et un jeu réparti entre la tête de pale et le pied de pales pour des ouvertures intermédiaires entre les faibles ouvertures et les fortes ouvertures, le rapport de section de passage d'air entre une faible ouverture et une forte ouverture étant de 1 pour 4.

2. Système selon la revendication 1, **caractérisé en ce que** lesdits moyens de pivotement sont couplés auxdits moyens de déplacement axial de la pale entre les deux parois de carter (11a, 11b) de sorte que chaque pale puisse, sur actionnement desdits moyens de déplacement axial et desdits moyens de pivotement par des moyens de commande (40), être simultanément pivotée autour dudit axe de pivotement (34) et déplacée axialement entre les deux parois de carter (11a, 11b), de manière à pouvoir modifier la section de passage d'air d'amont en aval du distributeur.

3. Système selon la revendication 2, **caractérisé en ce que** chaque pale (31) à calage variable dudit distributeur est solidaire d'un arbre fileté (32) s'étendant parallèlement audit axe central (10) le long dudit axe de pivotement (34), et coopérant avec au moins un taraudage (33) conjugué ménagé dans une desdites parois de carter de sorte que cette pale (31) puisse, sur actionnement dudit arbre fileté (32) par lesdits moyens de commande (40), être simultanément pivotée autour dudit axe de pivotement (34) et déplacée axialement entre les deux parois de carter (11a, 11b), cet arbre fileté (32) formant lesdits moyens de déplacement axial de la pale et lesdits moyens de pivotement de la pale.

4. Système selon la revendication 3, **caractérisé en ce que** ledit arbre fileté (32) de chaque pale (31) à calage variable dudit distributeur s'étend de part et d'autre de ladite pale de manière à pouvoir coopérer avec deux taraudages (33) conjugués ménagés respectivement dans chacune des deux parois de carter (11a, 11b) du distributeur.

5. Système selon l'une des revendications 3 ou 4, **caractérisé en ce que** lesdits moyens de commande (40) desdites pales (31) à calage variable dudit distributeur sont configurés pour pouvoir actionner simultanément l'arbre fileté (32) de chaque pale.

6. Système selon l'une des revendications 3 à 5, **caractérisé en ce que** ledit arbre fileté de chaque pale (31) dudit distributeur présente un filetage non régulier de manière à pouvoir définir une loi de commande du déplacement de la pale non linéaire.

7. Système selon l'une des revendications 1 à 6, **caractérisé en ce que** ledit distributeur comprend au moins douze pales à calage variable régulièrement réparties autour de l'axe central (10).

8. Aéronef comprenant au moins une cabine alimentée en air à température et pression contrôlées par un système de conditionnement d'air, **caractérisé en ce que** ledit système de conditionnement d'air est un système conforme à l'une des revendications 1 à 7.

## Patentansprüche

1. Klimatisierungssystem eines Flugzeugs mit einer Turbomaschine, die mindestens eine Radialturbine und einen Kompressor umfasst, worin sich die Radialturbine entlang einer Mittelachse (10) erstreckt und ein mit Flügeln (21) versehenes Laufrad (20) umfasst, das drehbar um die Mittelachse (10) montiert ist, einen Verteiler (30), der am Umfang des Rades (20) angeordnet ist und mehrere Schaufeln (31) mit variabler Verstellung umfasst, die um die Mittelachse (10) herum angeordnet sind, und eine Spirale (12), die einen Lufteinlass (12a) und einen Luftauslass (12b) umfasst, die in die mehreren Schaufeln (31) mit variabler Verstellung münden,
worin die Schaufeln (31) mit variabler Verstellung um die Mittelachse (10) zwischen zwei Gehäusewänden (11a, 11b) des Verteilers angeordnet sind, die zwischen sich einen Luftdurchgangsquerschnitt des Verteilers begrenzen, worin jede Schaufel (31) mit variabler Verstellung zudem umfasst:
- Mittel zur axialen Versetzung des Flügels zwischen den beiden Gehäusewänden (11a, 11b),
- Mittel zum Schwenken des Flügels um eine Schwenkachse (34) zwischen den beiden Gehäusewänden (11a, 11b),
**dadurch gekennzeichnet, dass** die Mittel zum Schwenken des Flügels und die Mittel zur axialen Versetzung so koordiniert sind, dass sie den Luftdurchlassquerschnitt von stromaufwärts nach stromabwärts des Verteilers verändern können, indem sie ein Spiel am Schaufelfuß, das für geringe Schaufelöffnungen größer als am Schaufelkopf ist, ein Spiel am Schaufelkopf, das für große Schaufelöffnungen größer ist als am Schaufelfuß, und ein zwischen Schaufelkopf und Schaufelfuß verteiltes Spiel für Öffnungen zwischen den kleinen Öffnungen und den großen Öffnungen begrenzen, worin das Verhältnis des Luftdurchlassquerschnitts zwischen einer kleinen Öffnung und einer großen Öffnung 1 zu 4 beträgt.

2. System nach Anspruch 1, **dadurch gekennzeichnet, dass** die Mittel zum Schwenken mit den Mitteln zur axialen Versetzung der Schaufel zwischen den beiden Gehäusewänden (11a, 11b) gekoppelt sind, so dass jede Schaufel bei Betätigung der Mittel zur axialen Versetzung und der Schwenkmittel durch Steuermittel (40) gleichzeitig um die Schwenkachse (34) geschwenkt und axial zwischen den beiden Gehäusewänden (11a, 11b) verschoben werden kann, so dass der Luftdurchlassquerschnitt von stromaufwärts nach stromabwärts des Verteilers verändert werden kann.

3. System nach Anspruch 2, **dadurch gekennzeichnet, dass** jede Schaufel (31) mit variabler Verstellung des Verteilers fest mit einer Gewindewelle (32) verbunden ist, die sich parallel zur Mittelachse (10) entlang der Schwenkachse (34) erstreckt und mit mindestens einem konjugierten Innengewinde (33) zusammenwirkt, das in einer der Gehäusewände ausgebildet ist, so dass diese Schaufel (31), bei Betätigung der Gewindewelle (32) durch die Steuermittel (40) gleichzeitig um die Schwenkachse (34) geschwenkt und zwischen den beiden Gehäusewänden (11a, 11b) axial verschoben werden kann, worin diese Gewindewelle (32) die Mittel zur axialen Versetzung der Schaufel und die Mittel zum Schwenken der Schaufel ausbildet.

4. System nach Anspruch 3, **dadurch gekennzeichnet, dass** die Gewindewelle (32) jeder Schaufel (31) mit variabler Verstellung des Verteilers sich auf beiden Seiten der Schaufel so erstreckt, dass diese mit zwei konjugierten Innengewinden (33) zusammenwirken kann, die jeweils in jeder der beiden Gehäusewände (11a, 11b) des Verteilers ausgebildet sind.

5. System nach einem der Ansprüche 3 oder 4, **dadurch gekennzeichnet, dass** die Steuermittel (40) der verstellbaren Schaufeln (31) des Verteilers ausgestaltet sind, die Gewindewelle (32) jeder Schaufel gleichzeitig betätigen zu können.

6. System nach einem der Ansprüche 3 bis 5, **dadurch gekennzeichnet, dass** die Gewindewelle jeder Schaufel (31) des Verteilers ein nicht-regelmäßiges Gewinde aufweist, so dass ein nicht-lineares Steuergesetz für die Versetzung der Schaufel definiert werden kann.

7. System nach einem der Ansprüche 1 bis 6, **dadurch gekennzeichnet, dass** der Verteiler mindestens zwölf gleichmäßig um die Mittelachse (10) verteilte, verstellbare Schaufeln umfasst.

8. Flugzeug mit mindestens einer Kabine, die durch ein Klimatisierungssystem mit temperatur- und druckgesteuerter Luft versorgt wird, **dadurch gekennzeichnet, dass** das Klimatisierungssystem ein System nach einem der Ansprüche 1 bis 7 ist.

## Claims

1. Air conditioning system for an aircraft comprising a turbine engine comprising at least one radial turbine and a compressor, said radial turbine extending along a central axis (10) and comprising a wheel (20) equipped with vanes (21) mounted so as to be able to rotate about said central axis (10), a nozzle (30) arranged at the periphery of said wheel (20) comprising a plurality of variable-pitch blades (31) arranged around said central axis (10), and a volute (12) comprising an air inlet (12a) and an air outlet (12b) opening onto said plurality of variable-pitch blades (31),
said variable-pitch blades (31) being arranged around said central axis (10) between two nozzle casing walls (11a, 11b) delimiting an air passage section of said nozzle between them, each variable-pitch blade (31) further comprising:
- means for axial displacement of the blade between the two casing walls (11a, 11b),
- means for pivoting the blade about a pivot axis (34) between the two casing walls (11a, 11b).
**characterized in that** the said means for pivoting and said means for axial displacement are coordinated in such a way as to be able to modify the cross-section of air flow from upstream to downstream of the distributor by defining a greater clearance at the blade base than at the blade head for small blade openings, a greater clearance at the blade head than at the blade base for large blade openings, and a clearance distributed between the blade head and the blade base for intermediate openings between small openings and large openings, the ratio of air passage cross-section between a small opening and a large opening being 1 to 4.

2. System according to claim 1, **characterized in that** said means for pivoting are coupled to said means for axial displacement of the blade between the two casing walls (11a, 11b) so that each blade can, upon actuation of said axial displacement means and said pivoting means by control means (40), be simultaneously pivoted about said pivot axis (34) and displaced axially between the two casing walls (11a, 11b), so as to be able to modify the air passage section from upstream to downstream of the nozzle.

3. System according to claim 2, **characterized in that** each variable-pitch blade (31) of said nozzle is secured to a threaded shaft (32) extending parallel to said central axis (10) along said pivot axis (34), and cooperating with at least one combined internal thread (33) formed in one of said casing walls so that this blade (31) can, upon actuation of said threaded shaft (32) by said control means (40), be simultaneously pivoted about said pivot axis (34) and displaced axially between the two housing walls (11a, 11b), this threaded shaft (32) forming said means for axial displacement of the blade and said means for pivoting of the blade.

4. System according to claim 3, **characterized in that** said threaded shaft (32) of each variable-pitch blade (31) of said nozzle extends on either side of said blade so as to be able to cooperate with two combined internal threads (33) which are formed respectively in each of the two nozzle casing walls (11a, 11b).

5. System according to one of claims 3 or 4, **characterized in that** said control means (40) of said variable-pitch blades (31) of said nozzle are configured to be able to simultaneously actuate the threaded shaft (32) of each blade.

6. System according to one of claims 3 to 5, **characterized in that** said threaded shaft of each blade (31) of said nozzle has a non-regular thread so as to be able to define a law for controlling the displacement of the non-linear blade.

7. System according to one of claims 1 to 6, **characterized in that** said nozzle comprises at least twelve variable-pitch blades which are evenly distributed around the central axis (10).

8. Aircraft comprising at least one cabin supplied with air at a temperature and pressure controlled by an air conditioning system, **characterized in that** said air conditioning system is a system according to one of claims 1 to 7.
